# EUROPÄISCHE PATENTSCHRIFT

(11) **EP 2 890 942 B1**
(45) Veröffentlichungstag und Bekanntmachung des Hinweises auf die Patenterteilung: **17.10.2018**
(21) Anmeldenummer: 13748069.5
(22) Anmeldetag: 13.08.2013
(51) Int. Cl.: F25D 23/06

(54) **GEHÄUSE FÜR EIN HAUSHALTSKÄLTEGERÄT MIT ZUMINDEST EINEM HINTERLEGTEIL SOWIE HAUSHALTSKÄLTEGERÄT MIT EINEM DERARTIGEN GEHÄUSE**
HOUSING FOR A HOUSEHOLD REFRIGERATING DEVICE COMPRISING AT LEAST ONE BACKING PART AND HOUSEHOLD REFRIGERATING DEVICE COMPRISING SAID TYPE OF HOUSING
ENVELOPPE D'APPAREIL DE FROID MÉNAGER COMPORTANT AU MOINS UNE PARTIE D'INTÉGRATION ARRIÈRE, ET APPAREIL DE FROID MÉNAGER COMPORTANT UNE ENVELOPPE DE CE TYPE

(30) Priorität: 29.08.2012 DE 102012215316
(43) Veröffentlichungstag der Anmeldung: 08.07.2015
(73) Patentinhaber: BSH Hausgeräte GmbH, 81739 München (DE)
(72) Erfinder: BIBERACHER, Sven, 89186 Illerrieden (DE); BRESCH, Mathias, 89520 Heidenheim (DE); DIEBOLD, Jürgen, 89568 Hermaringen (DE); KÜMMEL, Roland, 89191 Nellingen (DE); NAHLES, Guido, 89520 Heidenheim (DE); NEHER, Hermann, 73431 Aalen (DE); NUIDING, Wolfgang, 89537 Giengen (DE); SCHILK, Andreas, 89520 Heidenheim (DE); STELZER, Jörg, 89537 Giengen (DE); WOLF, Bertram, 63452 Hanau (DE)
(86) Internationale Anmeldenummer: PCT/EP2013/066927
(87) Internationale Veröffentlichungsnummer: WO 2014/032967

(56) Entgegenhaltungen:
- EP-A1- 1 505 359
- DE-A1-102010 039 571
- DE-A1-102010 040 076
- JP-A- 2011 153 787
- US-A- 5 512 345
- US-A1- 2003 071 550

## Beschreibung

Die Erfindung betrifft ein Gehäuse für ein Haushaltskältegerät, mit einer Außenwand und einem Innenbehälter, der beabstandet zur Außenwand angeordnet ist, und einem zwischen der Außenwand und der Innenwand gebildeten Zwischenraum, in dem zumindest ein Vakuumisolationselement angeordnet ist. Des Weiteren betrifft die Erfindung ein Haushaltskältegerät mit einem derartigen Gehäuse, welches ein Außengehäuse ist.
Aus der DE 10 2009 060 079 A1 ist ein Kühl- oder Gefriergerät mit einem Innenbehälter und einer den Innenbehälter zumindest teilweise umhüllenden Wand bekannt. Ein Raum zwischen dem Innenbehälter und der Wand ist vorgesehen, wobei wenigstens ein Vakuumisolierpaneel im Raum angeordnet ist und ein das Vakuumisolierpaneel umhüllendes schaumstoffartiges Material eingebracht ist. Das Vakuumisolierpaneel ist mittels Abstandshaltern beabstandet am Innenbehälter montiert.
Darüber hinaus ist aus der DE 10 2009 041 914 A1 eine Tür oder eine Klappe für ein Kühl- und/oder Gefriergerät bekannt. Die Innentür ist konturiert und weist eine Mehrzahl von übereinander bzw. nebeneinander angeordneten Vertiefungen auf. Auf die Innenseite der Innentür werden eine oder mehrere Vakuumpaneele unmittelbar geklebt. Diese weisen eine Konturierung auf, die dem Negativ der Konturierung der Innenseite der Innentür entspricht.

JP2011153787 offenbart eine Gehäuse gemäß dem Oberbegriff des Anspruchs 1.

Es ist Aufgabe der vorliegenden Erfindung, ein Gehäuse und ein Haushaltskältegerät zu schaffen, bei dem ein Vakuumisolationselement so an den Innenbehälter angekoppelt ist, dass eine Energieeffizienzverbesserung des Haushaltskältegeräts erreicht ist.
Diese Aufgabe wird durch ein Gehäuse und ein Haushaltskältegerät gemäß den unabhängigen Ansprüchen gelöst.

Ein erfindungsgemäßes Gehäuse für ein Haushaltskältegerät umfasst eine Außenwand und einen Innenbehälter, der beabstandet zur Außenwand angeordnet ist. Das Gehäuse umfasst darüber hinaus einen Zwischenraum zwischen der Außenwand und der Innenwand, in dem zumindest ein Vakuumisolationselement angeordnet ist. Der Innenbehälter weist an einer Außenseite zumindest eine Vertiefung auf, in welcher ein vor dem Einsetzen in die Vertiefung in seinen Ausmaßen fertiges Hinterlegteil eingesetzt ist. Im eingesetzten Zustand ist eine Außenfläche des Hinterlegteils bündig mit der an die Vertiefung anschließenden Oberfläche der Außenseite. Ein derartiges Hinterlegteil in die Vertiefung eingeklebt ist. Durch eine derartige Ausgestaltung ist es ermöglicht, dass bei einer aufgrund der Funktion mit Unebenheiten ausgebildeten Außenseite des Innenbehälters eine sehr große ebene Fläche als Anlagefläche für ein Vakuumisolationselement gebildet ist. Dadurch kann das Vakuumisolationselement möglichst großflächig an den Innenbehälter angekoppelt werden und dadurch die Energieeffizienz des Haushaltskältegeräts verbessert werden.
Durch derartige separate Hinterlegteile, die bereits vor ihrer Montage am Innenbehälter fertiggestellt sind, ist einerseits deren Montage vereinfacht, und andererseits die bündige Auslegung dieser Vertiefung besonders umfänglich und einfach möglich.
Gerade im Vergleich zu bekannten Ausführungen, bei denen derartige Vertiefungen in einem Innenbehälter in aufwändiger und fehleranfälliger Weise erst ausgeschäumt werden müssen, ist die erfindungsgemäße Ausgestaltung des Gehäuses deutlich vorteilhaft.
Vorzugsweise ist das Hinterlegteil passgenau in der Vertiefung angeordnet. Die oben genannten Vorteile treten dann besonders in den Vordergrund.
Vorzugsweise ist vorgesehen, dass das Vakuumisolationselement an der Außenseite des Innenbehälters und der Außenfläche des Hinterlegteils anliegend angeordnet ist. Auch hier werden die oben genannten Vorteile nochmals begünstigt.
Vorzugsweise ist vorgesehen, dass durch die Außenseite des Innenbehälters und die Außenfläche des Hinterlegteils eine ebene Fläche gebildet ist, die zumindest so groß wie die daran anliegende Fläche des Vakuumisolationselements ist. Dadurch kann eine besonders großflächige Anlage des Vakuumisolationselements in maximierter Weise erfolgen, wodurch sich auch die Isolationswirkung maximiert und die Energieeffizienz des Geräts entsprechend steigert.

Vorzugsweise ist vorgesehen, dass ein Hinterlegteil als Halteelement für eine Funktionseinheit des Haushaltskältegeräts ausgebildet ist. Eine derartige Ausgestaltung ist dahingehend besonders vorteilhaft, da somit das Hinterlegteil multifunktionell gebildet und verwendet wird. Neben einer Volumenauffüllung einer Vertiefung und insbesondere einer ebenen Angleichung mit der Außenseite des Innenbehälters ist darüber hinaus die Funktion eines Haltens von einer weiteren Einheit des Haushaltskältegeräts erfüllt.

Vorzugsweise ist vorgesehen, dass sich das Hinterlegteil durch eine Öffnung in den Innenbehälter erstreckt und ein Haltebereich des Hinterlegteils im Inneren des Innenbehälters positioniert ist. Für eine derartige Ausgestaltung erstreckt sich das Hinterlegteil beidseits des Innenbehälters, wodurch einerseits eine zuverlässige Befestigung und andererseits die multiple Funktionserfüllung auf beiden Seiten des Innenbehälters erreicht sind.

Vorzugsweise ist vorgesehen, dass der Haltebereich des Hinterlegteils als Klammer oder Rastelement oder Steckelement oder Teilelement ausgebildet ist. Dadurch können unterschiedlichste mechanische Anbindungen der Funktionseinheit an das Hinterlegteil ermöglicht werden. So kann beispielsweise als Funktionseinheit ein Lüfter an diesem Hinterlegteil mechanisch befestigt werden. Ebenso kann jedoch beispielsweise auch ein Innenraumteiler bzw. ein Ablageboden, der im Inneren des Innenbehälters und somit in dem Aufnahmeraum für Kältegut angeordnet ist, befestigt werden. Insbesondere kann darüber hinaus auch ein Gestell zur Aufnahme eines derartigen Innenraumteilers an dem Haltebereich des Hinterlegteils befestigt werden. Ein derartiges Gestell kann beispielsweise aus Stäben ausgebildet sein, wobei Trägerstäbe vorgesehen sind, an denen Führungsstäbe angeordnet sind. Die Trägerstäbe sind in dem Zusammenhang beispielsweise vertikal orientiert und die Führungsstäbe erstrecken sich zwischen zwei derartigen Trägerstäben, wobei immer zwei Führungsstäbe eine Einschubebene für einen Innenraumteiler bilden. Zwei derartige Führungsstäbe an einer Seite bilden somit einen unteren und einen oberen Begrenzer, wobei sie beabstandet in vertikaler Richtung betrachtet angeordnet sind und sich jeweils in einer Horizontalebene erstrecken.

Es können auch kompatible Teilelemente vorgesehen sein, die aneinander anliegend das Halten eines Innenraumteilers an einem derartigen Haltebereich des Hinterlegteils ermöglichen.

Darüber hinaus betrifft die Erfindung auch ein Haushaltskältegerät mit einem erfindungsgemäßen Gehäuse oder einer vorteilhaften Ausgestaltung davon. Das Haushaltskältegerät kann beispielsweise ein Kühlgerät oder ein Gefriergerät für Kältegut sein. Es kann jedoch auch ein Kombigerät sein, welches zum Kühlen und Gefrieren von Kältegut ausgebildet ist. Das Kältegut ist Lebensmittel.
Durch die großflächige Anbringung der Vakuumisolationselemente nahe am Innenbehälter, wo die flächenspezifische Wärmestromdichte höher ist, werden die Vakuumisolationselemente effizienter genutzt. Darüber hinaus wird durch die höhere Oberflächenbelegung mit Vakuumisolationselementen das Haushaltskältegerät effizienter betrieben, da die Vakuumisolationselemente besser dämmen als ein Schaummaterial. Vorzugsweise ist vorgesehen, dass ein Hinterlegteil als Halteelement für eine Funktionseinheit des Haushaltskältegeräts ausgebildet ist und die Funktionseinheit ein Innenraumteiler bzw. ein Ablageboden für Lebensmittel oder ein Verdampfer oder ein Aufnahmegestell für einen Innenraumteiler ist.
Ausführungsbeispiele der Erfindung werden nachfolgend anhand schematischer Zeichnungen näher erläutert. Es zeigen:
- Fig. 1: eine perspektivische Darstellung eines Ausführungsbeispiels eines erfindungsgemäßen Haushaltskältegeräts;
- Fig. 2: eine perspektivische Darstellung eines Ausführungsbeispiels eines Innenbehälters des Haushaltskältegeräts gemäß Fig. 1;
- Fig. 3: eine vergrößerte Darstellung eines Teilausschnitts der Ausführung in Fig. 2 mit erkennbaren Hinterlegteilen;
- Fig. 4: eine Schnittdarstellung eines Teilausschnitts des Haushaltskältegeräts gemäß Fig. 1; und
- Fig. 5: eine Explosionsdarstellung eines multifunktionellen Hinterlegteils mit daran befestigbarem Lüfter.

In den Figuren werden gleiche oder funktionsgleiche Elemente mit den gleichen Bezugszeichen versehen.

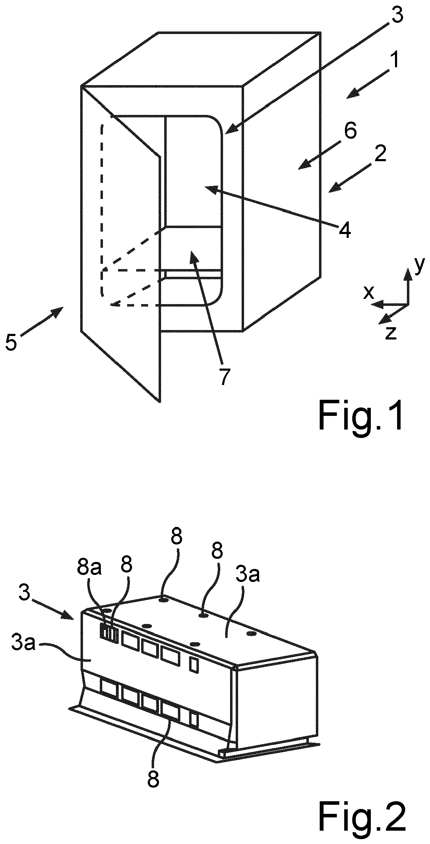

In Fig. 1 ist ein Haushaltskältegerät 1 gezeigt, welches ein Kühlgerät oder ein Gefriergerät oder ein Kombigerät ist und zur Aufnahme von Lebensmitteln ausgebildet ist. Das Haushaltskältegerät 1 umfasst ein Gehäuse 2, welches das Außengehäuse ist. Das Gehäuse 2 umfasst einen Innenbehälter 3, dessen Wände einen Aufnahmeraum 4, in den das Kältegut in Form von Lebensmitteln eingebracht werden kann, begrenzt. Der Innenbehälter 3 weist frontseitig eine Beschickungsöffnung auf, die durch eine Tür 5 verschließbar ist.

Das Gehäuse 2 umfasst darüber hinaus eine Außenwand 6, die beabstandet zum Innenbehälter 3 angeordnet ist. Die Tür 5 ist schwenkbar an dem Gehäuse 2 angeschlagen.

Darüber hinaus ist in Fig. 1 beispielhaft sowohl in Anzahl als auch in Position ein die Funktionseinheit 7 in Form eines Innenraumteilers bzw. eines Ablagebodens für die Lebensmittel, gezeigt.

In Fig. 2 ist eine perspektivische Darstellung des Innenbehälters 3 gezeigt. Dieser weist an einer Außenseite 3a eine Mehrzahl von Vertiefungen 8 auf, so dass die Außenseite 3a uneben gebildet ist.

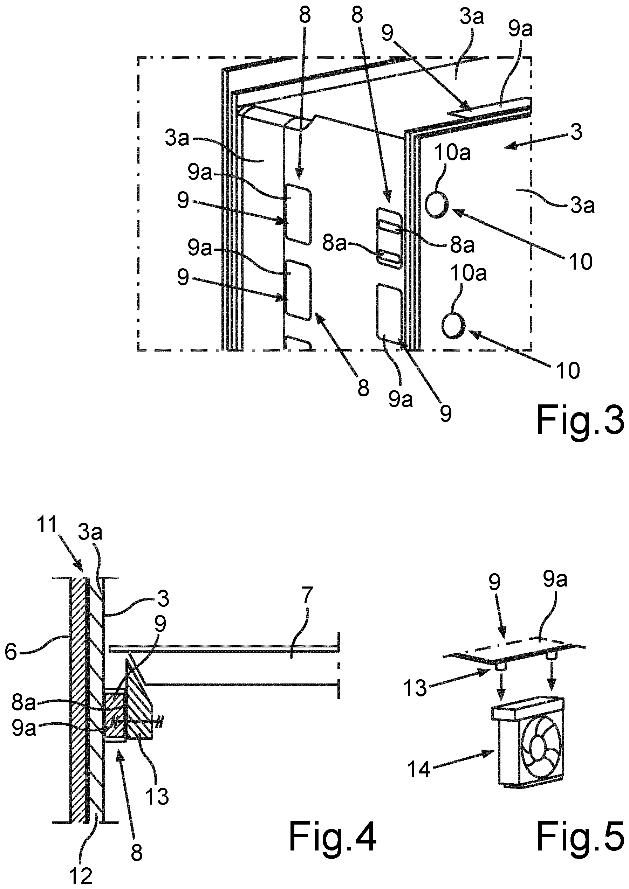

Wie in der vergrößerten Darstellung in Fig. 3 gezeigt ist, sind in den Vertiefungen 8 Hinterlegteile 9 und 10 angeordnet. Die Hinterlegteile 9 sind plattenartig ausgebildet. Die Hinterlegteile 10 sind zylinderförmig oder pilzartig ausgebildet. Darüber hinaus ist in Fig. 3 zur Verdeutlichung eine Vertiefung 8 ohne ein derartiges Hinterlegteil 9 dargestellt. Die Hinterlegteile 9 und 10 sind vorgefertigte separate Bauteile, die vor dem Einsetzen in die Vertiefung 8 in ihren Ausmaßen bereits fertig gestellt sind.
Außenflächen 9a und 10a der Hinterlegteile 9 und 10 sind im eingesetzten Zustand dieser Hinterlegteile 9 und 10 bündig mit den Außenseiten 3a angeordnet. Durch diese Ausgestaltung wird eine großflächige ebene Fläche geschaffen, die als Anlagefläche für ein Vakuumisolationselement dient. Ein Vakuumisolationselement ist in einem Zwischenraum 11 zwischen dem Innenbehälter 3 und der Außenwand 6 angeordnet, wie in Fig. 4 in einer Schnittdarstellung beispielhaft gezeigt ist. Das Vakuumisolationselement 12 liegt dabei auf der Außenseite 3a und der Außenfläche 9a an.

Wie aus den Darstellungen in Fig. 2 und Fig. 3 zu erkennen ist, weisen die Vertiefungen 8 Öffnungen 8a auf, durch welche sich die Hinterlegteile 9 und 10 durch die Wände des Innenbehälters 3 in den Aufnahmeraum 4 und somit in das Innere des Innenbehälters 3 erstrecken.
Im Ausführungsbeispiel ist vorgesehen, dass zumindest ein Hinterlegteil 9 und/oder 10 multifunktionell gestaltet ist. Neben einem Erzeugen einer ebenen Anlagefläche in Verbindung mit der Außenseite 3a ist ein Hinterlegteil 9 und/oder 10 auch als Halteelement für eine Funktionseinheit 7 des Haushaltskältegeräts 1 ausgebildet.
In Fig. 3 sind zur besseren Erkennbarkeit der Vertiefungen 8 und der Hinterlegteile 9 und 10 die dann auf der Außenseite 3a und den Außenflächen 9a und 10a angeordneten Vakuumisolationselemente nicht gezeigt. Vorzugsweise ist hier vorgesehen, dass die Außenfläche 3a und die Außenflächen 9a und 10a eine Gesamtfläche ergeben, die vorzugsweise zu zumindest 80 %, insbesondere zu zumindest 90 % von Vakuumisolationselementen 12 bedeckt sind. Dadurch wird eine besonders großflächige Bedeckung erreicht, wodurch sich die Energieeffizienz des Haushaltskältegeräts 1 erhöht.

Darüber hinaus ist zu erkennen, dass die Hinterlegteile 9 und 10 passgenau in den Vertiefungen 8 angeordnet sind.

Dazu ist in Fig. 4 beispielhaft gezeigt, dass das Hinterlegteil 9 einen Haltebereich 13 aufweist. Dieser Haltebereich 13 ist im Aufnahmeraum 4 positioniert. Er dient im Ausführungsbeispiel gemäß Fig. 4 dazu, die als Ablageboden bzw. Innenraumteiler ausgebildete Funktionseinheit 7 zu halten bzw. diese kann auf den Haltbereich 13 aufgesetzt werden. Der Haltebereich 13 ist im gezeigten Ausführungsbeispiel keilförmig. Es kann durch die entsprechende kompatibel dazu ausgebildete Formgebung der Funktionseinheit 7 eine entsprechende Anlage dieser keilförmigen Teile erreicht werden. Die Keilform kann auch in eine andere Richtung orientiert sein und beispielsweise dem Innenbehälter 3 zugewandt sein, so dass die Schräge dann dem Innenbehälter 3 zugewandt ist. Entsprechend komplementär ist dann die keilförmige Ausgestaltung der Funktionseinheit 7 in diesem Anlagebereich.

Es kann vorgesehen sein, dass das Hinterlegteil 9 mit dem Haltebereich 13 einstückig ausgebildet ist. Es kann jedoch auch eine zusammengesetzte Ausgestaltung vorgesehen sein.

In Fig. 5 ist eine Explosionsdarstellung des Hinterlegteils 9 gezeigt, wie es in Fig. 3 an der oberen horizontalen Wand des Innenbehälters 3 dargestellt ist. An diesem Hinterlegteil 9 sind ebenfalls wiederum Haltebereiche 13 integral ausgebildet, welche als Steckelemente oder Rastelemente vorgesehen sind. An diesem Haltbereich 13 kann ein Lüfter 14 zerstörungsfrei lösbar befestigt werden. Der Lüfter 14 ist in der Darstellung in Fig. 3 hinter der rückwärtigen Wand des Innenbehälters 3 verdeckt angeordnet und somit in Fig. 3 nicht sichtbar. Er ist dann dem Aufnahmeraum 4 zugewandt positioniert. Im zusammengesetzten Zustand ist gemäß der Darstellung in Fig. 3 erkennbar, dass auch hier die Außenfläche 9a dieses Hinterlegteils 9 bündig mit der Außenseite 3a angeordnet ist.

Darüber hinaus ist zu erwähnen, dass mittels den Hinterlegteilen 10 ein hinter der Rückwand 3a angeordneter Verdampfer gehalten ist, so dass auch die Hinterlegteile 10 mit einer zusätzlichen Haltefunktion ausgestaltet sind.

### Bezugszeichenliste

- 1: Haushaltskältegerät
- 2: Gehäuse
- 3: Innenbehälter
- 3a: Außenseite
- 4: Aufnahmeraum
- 5: Tür
- 6: Außenwand
- 7: Funktionseinheit
- 8: Vertiefung
- 8a: Öffnung
- 9: Hinterlegteil
- 9a: Außenfläche
- 10: Hinterlegteil
- 10a: Außenfläche
- 11: Zwischenraum
- 12: Vakuumisolationselement
- 13: Haltebereich
- 14: Lüfter

## Patentansprüche

1. Gehäuse (2) für ein Haushaltskältegerät (1), mit einer Außenwand (6) und einem Innenbehälter (3), der beabstandet zur Außenwand (6) angeordnet ist, und einem zwischen der Außenwand (6) und dem Innenbehälter (3) gebildeten Zwischenraum (11), in dem zumindest ein Vakuumisolationselement (12) angeordnet ist, wobei der Innenbehälter (3) an einer Außenseite (3a) zumindest eine Vertiefung (8) aufweist, in welcher ein vor dem Einsetzen in die Vertiefung (8) in seinen Ausmaßen fertiges Hinterlegteil (9, 10) eingesetzt ist, wobei im eingesetzten Zustand eine Außenfläche (9a, 10a) des Hinterlegteils (9, 10) bündig mit der an die Vertiefung (8) anschließenden Oberfläche der Außenseite (3a) ist, **dadurch gekennzeichnet dass** das plattenartig ausgebildete Hinterlegteil (9) in die Vertiefung (8) eingeklebt ist.

2. Gehäuse (2) nach Anspruch 1, **dadurch gekennzeichnet, dass** das Hinterlegteil (9, 10) passgenau in der Vertiefung (8) angeordnet ist.

3. Gehäuse (2) nach Anspruch 1 oder 2, **dadurch gekennzeichnet, dass** das Vakuumisolationselement (12) an der Außenseite (3a) und der Außenfläche (9a, 10a) anliegend angeordnet ist.

4. Gehäuse (2) nach Anspruch 3, **dadurch gekennzeichnet, dass** durch die Außenseite (3a) und die Außenfläche (9a, 10a) eine ebene Fläche gebildet ist, die zumindest so groß wie die daran anliegende Fläche des Vakuumisolationselements (12) ist.

5. Gehäuse (2) nach einem der vorhergehenden Ansprüche, **dadurch gekennzeichnet, dass** ein Hinterlegteil (9, 10) als Halteelement für eine Funktionseinheit (7) des Haushaltskältegeräts (1) ausgebildet ist.

6. Gehäuse (2) nach Anspruch 5, **dadurch gekennzeichnet, dass** sich das Hinterlegteil (9, 10) durch eine Öffnung (8a) in der Vertiefung (8) in dem Innenbehälter (3) erstreckt und ein Haltebereich (13) des Hinterlegteils (9, 10) im Aufnahmeraum (4) des Innenbehälters (3) positioniert ist.

7. Gehäuse (2) nach Anspruch 6, **dadurch gekennzeichnet, dass** der Haltebereich (13) als Klammer oder Rastelement oder Steckelement oder Keilelement ausgebildet ist.

8. Haushaltskältegerät (1) zur Aufnahme von Lebensmitteln mit einem Gehäuse (2) nach einem der vorhergehenden Ansprüche.

9. Haushaltskältegerät (1) nach Anspruch 8, bei welchem ein Hinterlegteil (9, 10) als Halteelement für eine Funktionseinheit (7) des Haushaltskältegeräts (1) ausgebildet ist und die Funktionseinheit (7) ein Innenraumteiler oder ein Verdampfer oder ein Aufnahmegestell für einen Innenraumteiler ist.

## Claims

1. Housing (2) for a household refrigerating device (1), having an outer wall (6) and an inner container (3), which is arranged at a distance from the outer wall (6), and a clearance (11) formed between the outer wall (6) and the inner container (3), in which at least one vacuum insulation element (12) is arranged, wherein the inner container (3) has at least one depression (8) on an exterior (3a), into which a backing part (9, 10) with finished dimensions is inserted prior to the insertion into the depression (8), wherein in the inserted state an outer surface (9a, 10a) of the backing part (9, 10) is flush with the surface of the exterior (3a) connecting to the depression (8), **characterised in that** the plate-type backing part (9) is glued into the depression (8).

2. Housing (2) according to claim 1, **characterised in that** the backing part (9, 10) is arranged snugly in the depression (8).

3. Housing (2) according to claim 1 or 2, **characterised in that** the vacuum insulation element (12) is arranged so as to rest on the exterior (3a) and the outer surface (9a, 10a).

4. Housing (2) according to claim 3, **characterised in that** a planar surface is formed by the exterior (3a) and the outer surface (9a, 10a), which is at least as large as the surface of the vacuum insulation element (12) resting thereupon.

5. Housing (2) according to one of the preceding claims, **characterised in that** a backing part (9, 10) is embodied as a holding element for a functional unit (7) of the household refrigerating device (1).

6. Housing (2) according to claim 5, **characterised in that** the backing part (9, 10) extends through an opening (8a) in the depression (8) in the inner container (3) and a holding region (13) of the backing part (9, 10) is positioned in the receiving compartment (4) of the inner container (3).

7. Housing (2) according to claim 6, **characterised in that** the holding region (13) is embodied as a bracket or latching element or plug-in element or wedge element.

8. Household refrigerating device (1) for receiving groceries having a housing (2) according to one of the preceding claims.

9. Household refrigerating device (1) according to claim 8, in which a backing part (9, 10) is embodied as a holding element for a functional unit (7) of the household refrigerating device (1) and the functional unit (7) is an interior divider or an evaporator or a receiving frame for an interior divider.

## Revendications

1. Corps (2) pour un appareil frigorifique ménager (1) avec une paroi extérieure (6) et un récipient intérieur (3) disposé écarté de la paroi extérieure (6) et un espace intermédiaire (11) formé entre la paroi extérieure (6) et le récipient intérieur (3), dans lequel au moins un élément d'isolation sous vide (12) est agencé, le récipient intérieur (3) présentant sur un côté extérieur (3a) au moins un évidement (8), dans lequel une pièce de doublure (9, 10), prête en ses dimensions avant son insertion dans l'évidement (8), est insérée, une surface extérieure (9a, 10a) de la pièce de doublure (9, 10) affleurant à l'état utilisé avec la surface du côté extérieur (3a) jouxtant l'évidement (8), **caractérisé en ce que** la pièce de doublure (9) configurée en plaque est collée dans l'évidement (8).

2. Corps (2) selon la revendication 1, **caractérisé en ce que** la pièce de doublure (9, 10) est disposée dans l'évidement (8) à dimensions idéales.

3. Corps (2) selon la revendication 1 ou 2, **caractérisé en ce que** l'élément d'isolation sous vide (12) est disposé jouxtant le côté extérieur (3a) et la surface extérieure (9a, 10a).

4. Corps (2) selon la revendication 3, **caractérisé en ce que** le côté extérieur (3a) et la surface extérieure (9a, 10a) forment une surface plane qui est au moins aussi grande que la surface de l'élément d'isolation sous vide (12) qui le jouxte.

5. Corps (2) selon l'une des revendications précédentes, **caractérisé en ce qu'**une pièce de doublure (9, 10) est configurée comme un élément de retenue pour une unité fonctionnelle (7) de l'appareil ménager (1).

6. Corps (2) selon la revendication 5, **caractérisé en ce que** la pièce de doublure (9, 10) s'étend par une ouverture (8a) dans l'évidement (8) dans le récipient intérieur (3) et une zone de retenue (13) de la pièce de doublure (9, 10) est positionnée dans l'espace de logement (4) du récipient intérieur (3).

7. Corps (2) selon la revendication 6, **caractérisé en ce que** la zone de retenue (13) est configurée comme une bride de fixation ou un élément de clipsage ou un élément à enficher ou un élément trapézoïdal.

8. Appareil frigorifique ménager (1) pour le logement de denrées avec un corps (2) selon l'une des revendications précédentes.

9. Appareil frigorifique ménager (1) selon la revendication 8, dans lequel une pièce de doublure (9, 10) est configurée comme un élément de retenue destiné à une unité fonctionnelle (7) de l'appareil frigorifique ménager (1) et l'unité fonctionnelle (7) est un diviseur d'espace intérieur ou un évaporateur ou un support de logement pour un diviseur d'espace intérieur.
